# EUROPÄISCHE PATENTSCHRIFT

(11) **EP 0 651 225 B1**
(45) Veröffentlichungstag und Bekanntmachung des Hinweises auf die Patenterteilung: **12.01.2000**
(21) Anmeldenummer: 94114934.6
(22) Anmeldetag: 22.09.1994
(51) Int. Cl.: F41G 1/34

(54) **Visiereinrichtung**
Sighting device
Dispositif de visée

(30) Priorität: 29.10.1993 DE 4336956
(43) Veröffentlichungstag der Anmeldung: 03.05.1995
(73) Patentinhaber: Hensoldt AG, 35573 Wetzlar (DE)
(72) Erfinder: Goubeaud, Karl-Heinz, D-35583 Wetzlar (DE); Hofmann, Martin, D-35606 Solms (DE)
(74) Vertreter: Müller-Rissmann, Werner Albrecht, Dr.

(56) Entgegenhaltungen:
- EP-A- 0 018 449
- CH-A- 652 204
- GB-A- 2 233 785
- US-A- 3 963 356

## Beschreibung

Die Patentanmeldung betrifft eine Visiereinrichtung nach dem Oberbegriff des ersten Patentanspruchs.

Es sind Schnellschuß-Visiereinrichtungen bekannt, welche einen Zielpunkt in das Auge des Visierenden abbilden.

Aus der EP 0 018 449 Al ist ein Reflexvisier mit einer optischen Achse und mit einer farbiges Licht ausstrahlenden Beleuchtungseinrichtung zur Erzeugung einer in das Auge eines Visierenden abgebildeten farbigen Zielmarke bekannt, wobei in der Beleuchtungseinrichtung eine zuschaltbare Lichtquelle vorhanden ist und in der lumineszierendes Material, welches von natürlichem Licht bestrahlt wird, als Lichtquelle enthalten ist.

Aus der GB 2 233 785 A ist eine Teleskopeinrichtung bekannt, die einen Lichtleiter aufweist, der lumineszierendes Material umfaßt. Das aus dem Lichtleiter endseitig austretende Licht wird über eine reflektierende Schicht, die auch in Bezug auf vorbestimmte Wellenlängen teilreflektierend zur Bereitstellung eines Reflexes in einer vorbestimmten Farbe ausgebildet sein kann, in das Auge des Betrachters reflektiert.

Aus der US-PS 3,992,782 ist eine Visiereinrichtung bekannt, bei welcher eine von Tageslicht beleuchtete Zielmarke in die Visierlinie eingespiegelt wird. Diese Visiereinrichtung kann als Reflexvisier bezeichnet werden.

Aus der CH-PS 652 204 ist ein weiteres Reflexvisier bekannt, bei welcher ein das Bild einer Leuchtdiode in die Visierlinie einreflektiert wird. Dies ist auch aus der WO 87/07005 bekannt.

Von der britischen Firma epc. Ltd. ist aus der Zeitschrift Visier 6/1991 ein Leuchtpunktzielgerät bekannt, welche einen Helligkeitssensor besitzt, welcher die Helligkeit einer Leuchtdiode steuert, die in die Visierlinie hinein reflektiert wird.

Von der amerikanischen Firma Elbit ist eine Visiereinrichtung bekannt, welche unter dem Namen Falcon Mark III vertrieben wird, bei welcher dasselbe erfolgt. Im Gegensatz zu der Visiereinrichtung der Firma epc. strahlt hier die LED direkt in Richtung auf ein objektivseitig angeordnetes Doppellinsenelement mit einer teilreflektierenden Schicht in ihrem Inneren.

Es ist die Aufgabe der Erfindung eine Beleuchtungseinrichtung für eine Visiereinrichtung zu schaffen, die das natürliche Licht zur Erzeugung einer farbigen Zielmarke nutzen kann und durch die das Erscheinungsbild der Zielmarke verbessert ist.

Diese Aufgabe wird durch den kennzeichnenden Teil des ersten Patentanspruchs gelöst.

Durch die Maßnahme, daß der Beleuchtungseinrichtung ein lichtempfindliches Element das vom Tageslicht ungestört bestrahlbar angeordnet ist, zugeordnet ist, wobei bei aufgenommener starker Lichteinstrahlung die zuschaltbare Lichtquelle, deren Licht in die lumineszierende Schicht strahlt, mit maximaler Leistung betrieben wird, wird der Kontrast der Zielmarke im Vergleich zu dem durch das Reflexvisier betrachteten Umfeld verbessert. Dies kann insbesondere beim Einsatz des Reflexvisiers zur Betrachtung einer Schneelandschaft bzw. einer Wüstenlandschaft sinnvoll sein, um einen möglichst gleichbleibenden Kontrast der Zielmarke zur betrachteten Umgebung zu gewährleisten.

Es hat sich als vorteilhaft herausgestellt, die zusätzliche Lichtquelle in der Nacht, also bei geringer Umgebungsbeleuchtung, mit geringer Leistung zu betreiben, so daß der Kontrast der Zielmarke an die Helligkeit der durch das Reflexvisier betrachteten Umgebung angepaßt ist.

In einer vorteilhaften Ausführungsform ist vorgesehen, daß der zusätzlichen Lichtquelle ein Schalter zugeordnet ist, mittels dessen Betätigung die zusätzliche Lichtquelle zur Verbesserung des Kontrastes der Zielmarke zuschaltbar ist.

Es hat sich bei den Versuchen gezeigt, daß es vorteilhaft ist, wenn das lumineszierende Material als rechteckförmige Platte ausgebildet ist, wobei die Dicke des lumineszierenden Materials kleiner als die Länge oder die Breite sein sollte. Dabei ist die Bestrahlungsfläche durch das natürliche Licht durch die Länge und Breite der rechteckförmigen Platte gegeben. Vorteilhafterweise liegt das von der Beleuchtungseinrichtung ausgestrahlte Licht im visuellen Spektralbereich oberhalb 580nm, d.h. das Licht erscheint einem durch die Visiereinrichtung schauenden als rotes Licht. Wenn dieses Licht dann in der Visiereinrichtung an einem Element mit teilreflektierender Schicht (wobei diese teilreflektierende Schicht das aus der Beleuchtungseinrichtung austretende Licht dann zumindest zu einem hohen Prozentsatz reflektiert) in das Auge des Visierenden fokussiert wird, kann das Auge gleichzeitig alle vom Ziel kommende Strahlung im Spektralbereich kleiner 580 nm ungestört sehen. Dadurch sieht der Visierende durch die Visiereinrichtung ein fast ungestörtes, natürliches Bild. Dabei erscheint dem die Visiereinrichtung benutzenden die Zielmarke in der Zielebene, so daß er das Ziel und die Zielmarke gleichzeitig mit entspanntem Auge ansehen kann.

Vorteilhafterweise ist die teilreflektierende Schicht ein Kantenfilter, da sich dieses Filter mit einer relativ scharfen Kante herstellen läßt, und so das Bild des Ziels sich dem Benutzer möglichst unverändert darstellt. Bei Nacht, aber auch bei sehr starkem Lichteinfall ist es vorteilhaft, wenn eine zusätzliche Lichtquelle, deren Licht in das lumineszierende Material strahlt, in der Beleuchtungseinrichtung enthalten ist. Ob diese zusätzliche Lichtquelle erwünscht und notwendig ist, kann dann der Benutzer bestimmen.

Diese zusätzliche Lichtquelle ist vorteilhafter Weise eine elektrische Lichtquelle, da die Intensität des von dieser Lichtquelle ausgehenden Lichts leicht verändert werden kann (im Vergleich zu den sogenannten Beta-Lights). Dabei ist in die Stromversorgung der elektrischen Lichtquelle vorteilhafterweise ein lichtempfindliches Element eingebaut, welches die Intensität des natürlichen Lichts mißt und es so ermöglicht, daß die Leuchtstärke der elektrischen Lichtquelle der Intensitätsänderung des natürlichen Lichts angepaßt wird. Damit erhält man für alle Lichtverhältnisse ein genügend stark leuchtendes Bild der Zielmarke.

Vor der Beleuchtungseinrichtung ist vorteilhafterweise eine Blende angeordnet. Diese Blende hat vorteilhafterweise eine Öffnung, welche der gewünschten Zielmarke entspricht. Die Zielmarke selber kann dabei ein Punkt, eine Pfeilspitze, ein Strich-Punkt-Strich-Bild auf einer Linie oder jedes andere Bild, welches auch als Absehen bezeichnet werden kann, sein. Die Blende selber kann auf dem lumineszierenden Material angebracht sein (z.B. aufgedampft), oder sich aber vor dem lumineszierenden Material für Justagezwecke als ein eigenständiger Körper befinden.

Es ist vorteilhaft, wenn die Visiereinrichtung zum Verschmutzungsschutz ein geschlossenes Gehäuse besitzt. Dabei muß eine für das natürliche Tageslicht durchlässige Öffnung in diesem Gehäuse vorhanden sein, durch welche das lumineszierende Material vom natürlichen Tageslicht bestrahlt werden kann. Diese Öffnung (12a) kann auch als Lichtkanal bezeichnet werden und kann konstruktiv den jeweiligen Verhältnissen in der jeweiligen Visiereinrichtung entsprechend angepaßt werden.

Das geschlossene Gehäuse der Visiereinrichtung besitzt vorteilhafterweise okularseitig und objektivseitig einen durchsichtigen (d.h. für den visuellen Spektralbereich tranparenten) Gehäuseabschluß ohne beugende Wirkung für durchlaufende Lichtstrahlen (z.B. planparallele Glasplatte). Dabei ist der objektivseitige Gehäuseabschluß so gestaltet, daß er das von der Beleuchtungseinrichtung erzeugte Bild in der optischen Visiereinrichtung durch den okularseitigen Gehäuseabschluß in das Auge des Visierenden reflektiert und fokussiert. Dadurch verringert man die im Gehäuse enthaltenen optischen Bauteile eintscheident.

In einer bevorzugten Ausführungsform ist der objektivseitige Gehäuseabschluß aus zwei Linsen aufgebaut, welche jeweils eine äußere plane Oberfläche besitzen. Die inneren Linsenoberflächen liegen sich gegenüber. Dabei weist die eine Linse eine konkave und die andere Linse eine konvexe Oberfläche auf, wobei beide Flächen denselben Radius besitzen und so spaltlos zusammengefügt werden können zu einer planparallelen Platte. Die konkave und die konvexe Oberfläche ist im eingebauten Zustand der Doppellinsenanordnung so gegenüber der optischen Achse der Visiereinrichtung geneigt, daß das von der Beleuchtungseinrichtung kommende Licht fokussierend in Richtung des Beneutzers der Visiereinrichtung reflektiert wird. Die Reflektion des von der Beleuchtungseinrichtung kommenden Lichts erfolgt dabei an einer teilreflektierenden Schicht, welche sich zwischen den gekrümmten (konkaven und konvexen) Oberflächen der Linsen befindet. Dabei wird die Zielmarke so in das Auge des Benutzers der Visiereinrichtung abgebildet, daß sie für diesen in einer festegelegten Zielebene erscheint. Vorteilhafterweise ist die Visiereinrichtung ein Reflexvisier, welches sich insbesondere für einen schnellen Schuß eignet.

Die Erfindung wird nachstehend in beispielhafterweise anhand von Zeichnungen näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigen:
- Fig. 1: einen seitlichen Schnitt durch die erfindungsgemäße Visiervorrichtung;
- Fig. 2: einen Schnitt durch die Visiervorrichtung aus Fig. 1 senkrecht zu den optischen Achsen;
- Fig. 3: eine Detailzeichnung des Zielfernrohres;
- Fig. 4: eine Detailzeichnung des Zielfernrohres;
- Fig. 4a: eine Detailzeichnung des lumineszierenden Materials in der Beleuchtungseinrichtung des Reflexvisiers;
- Fig. 5: einen Schnitt durch das Reflexvisier aus Fig. 4 senkrecht zur optischen Achse;
- Fig. 6: einen Schaltplan für die Beschaltung der elektrischen Lichtquelle; und
- Fig. 7: eine chematische Zeichnung einer konstruktiven Variante des in Fig.4 dargestellten Reflexvisiers.

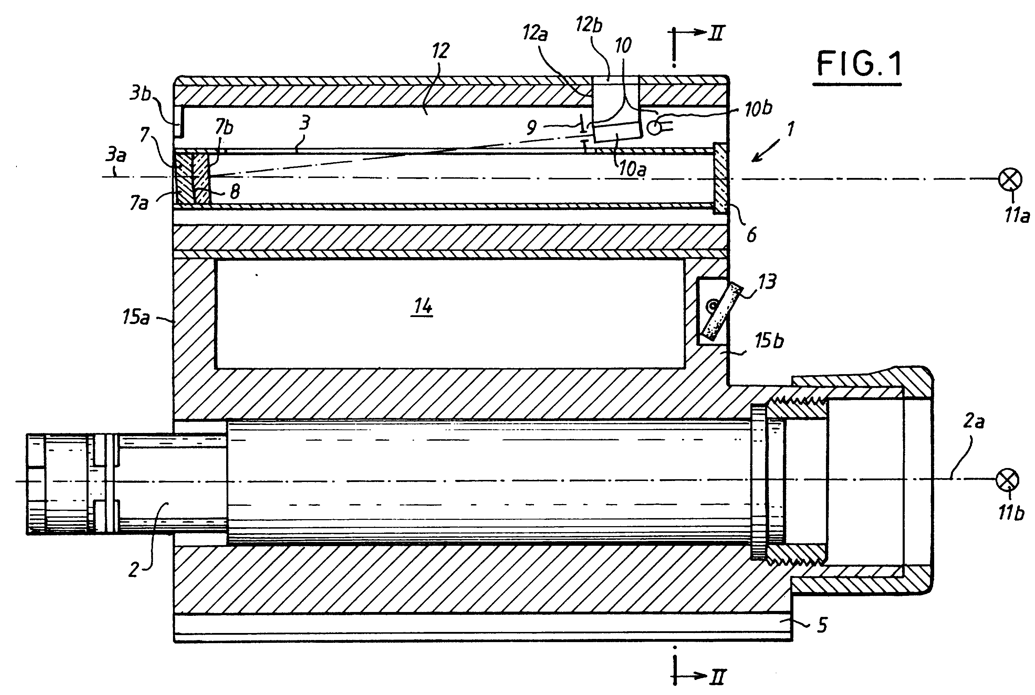

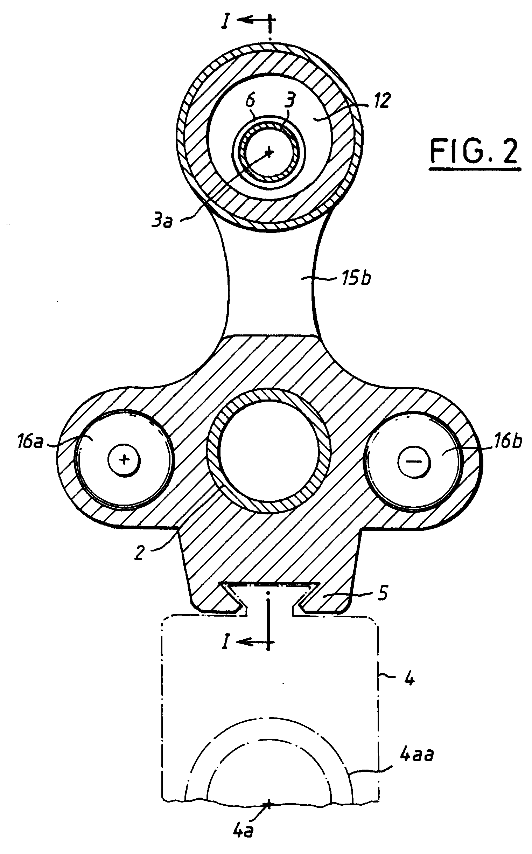

Die in Fig. 1 und 2 dargestellte Visiervorrichtung (1) besteht aus einem vergrößernden monokularen Zielfernrohr (2) und einem Reflexvisier (3).

Die Visiervorrichtung (1) ist lösbar auf einer Schußwaffe (4) (Gewehr) angebracht und besitzt an ihrem unteren Ende die dazu notwendige Klemmvorrichtung (5) nach bekanntem Stand der Technik. Die optische Achse (3a) des Reflexvisiers (3) und die optische Achse (2a) des Zielfernrohres (2) bilden mit der Achse (4a) des Gewehrlaufes (4aa) eine gemeinsame Ebene. Die Seelenachse des Gewehrlaufes ist wegen der Balistik gegenüber den optischen Achsen etwas erhöht. Die beiden optischen Achsen selber schneiden sich in der vorher festgelegten Entfernung.

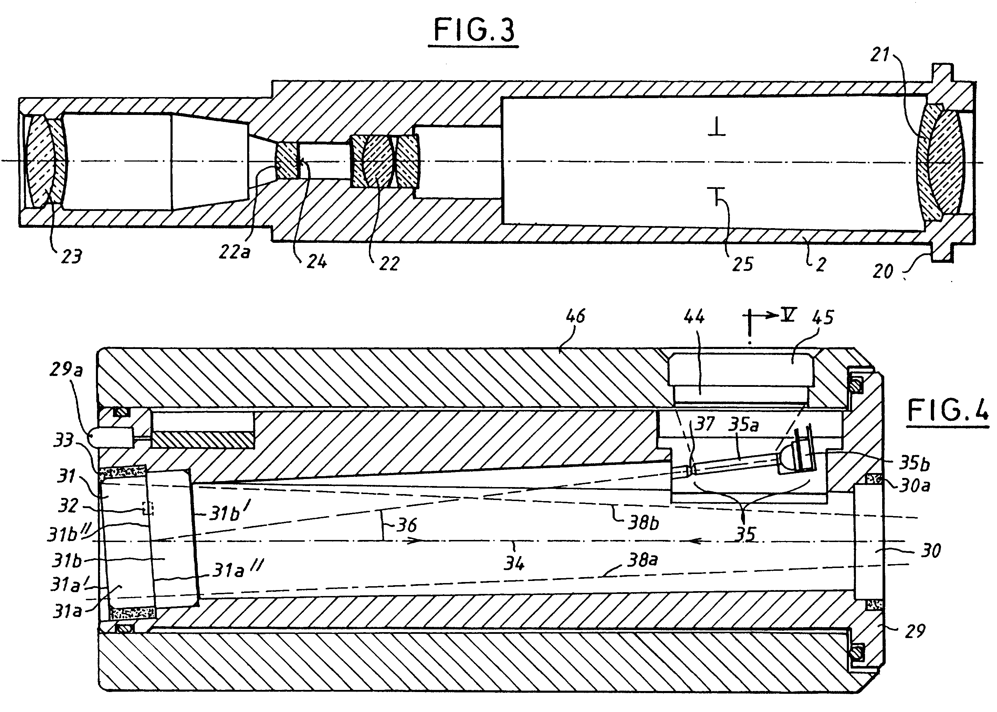

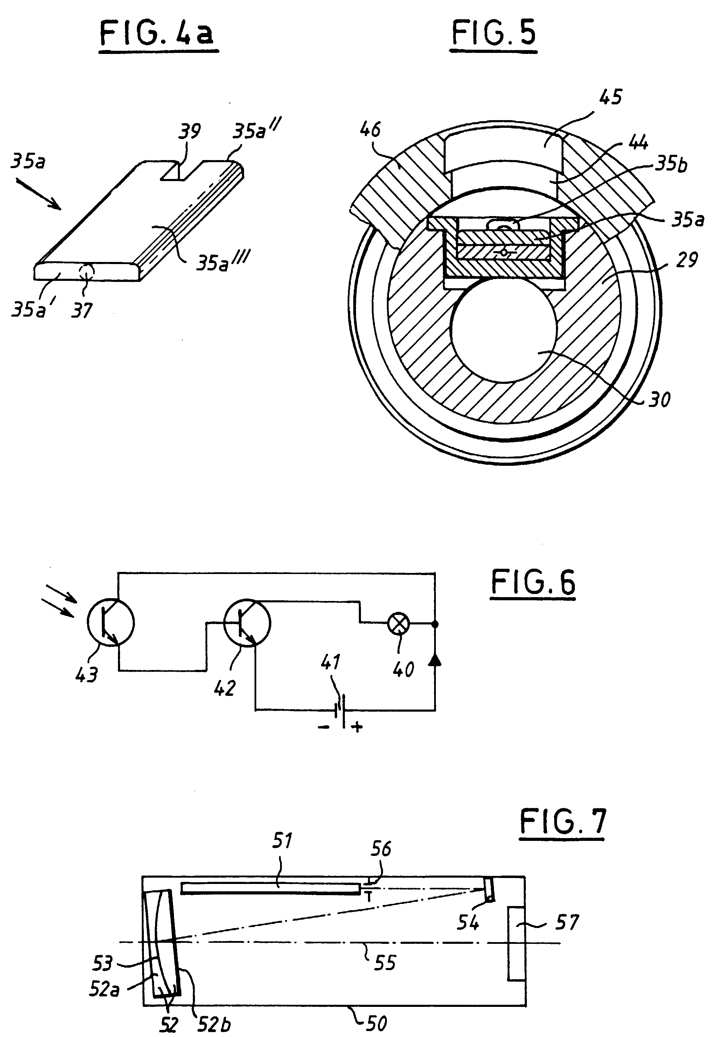

Das Reflexvisier (3), welches im Detail anhand der Fig. 4, 5 und 6 näher erläutert wird, ist oberhalb des Zielfernrohres (2), welches anhand der Fig. 3 noch näher erläutert wird, angeordnet. Dieses Reflexvisier (3) besitzt eine nichtvergrößernde Optik, welche auch als 1-zu-1 Optik bezeichnet wird, und ist für eine beidäugige Zielerfassung besonders gut geeignet.

Am okularseitigen Ende des Reflexvisiers (3) befindet sich eine planparallele Platte (6), welche als optisch transparenter Gehäuseabschluß für das geschlossene Gehäuse des Reflexvisiers (3) dient. Der objektivseitige Gehäuseabschluß (7) ist auch optisch transparent und besitzt eine teilreflektierende Schicht (8). Die Doppellinsenanordnung (7) besitzt eine erste äußere Linse (7a), welche eine äußere Planoberfläche und eine innere konkave Oberfläche besitzt. Die zweite, innere Linse (7b) der Doppellinsenanordnung (7) besitzt eine innere konvexe Oberfläche und eine äußere Planoberfläche. Der Radius der konkaven Oberfläche der ersten Linse (7a) und der Radius der konvexen Oberfläche (7) der zweiten Linse (7b) sind identisch. Die beiden Linsen (7a, 7b) sind an ihren nichtplanen Oberflächen zusammen gekittet. Zwischen den beiden Linsen (7a, 7b) befindet sich eine teilreflektierende Schicht (8), welche als Kantenfilter ausgeführt ist und welche Lichtstrahlen mit einer Wellenlänge größer als 580nm reflektiert. Diese teilreflektierende Schicht (8) ist für die Wellenlänge des aus der Lichtquelle (10) austretenden Lichtes optimiert.

Oberhalb der optischen Achse (3a) des Reflexvisiers (3) ist hinter einer Blende (9) eine Lichtquelle (10) in einer Beleuchtungseinrichtung angeordnet. Diese Lichtquelle (10) strahlt durch die Öffnung der Blende (9) Licht auf die teilreflektierende Schicht (8) des objektivseitigen Gehäuseabschlusses (7), welches durch diese Schicht (8) kollimiert in Richtung des Auges (11a) eines Visierenden (Schützen) reflektiert wird und für den Visierenden als scharf umgrenzter roter Punkt in der Zielebene erscheint.

Als Lichtquelle (10) dient dabei ein plattenförmiger Körper (10a) aus lumineszieren Material, welcher durch eine Öffnung (12a) im Gehäuse (12) des Reflexvisiers (3) mit natürlichem Licht (z.B. Tageslicht) bestrahlt wird. Außerdem ist hinter dem plattenförmigen Körper (10a) eine als elektrische Lichtquelle dienende Leuchtdiode (10b) angeordnet, deren Intensität durch ein lichtempfindliches Element (3b) beeinflußt wird.

Wenn das natürliche Licht (z.B. Tageslicht) hell genug ist, dringt durch das optisch transparente Abschlußfenster (12b) (planparallele Platte) am oberen Ende der Öffnung (12a) im Gehäuse (12) des Reflexvisiers (3) genügend Licht auf die aus lumineszierendem Material bestehende Platte (10a), um ausreichend Licht durch die Blende (9) in Richtung der teilreflektierenden Schicht (8) auszustrahlen, damit der Schütze mit seinem Auge (lla) einen klar umrissenen leuchtenden Punkt bei Durchsicht durch das Reflexvisier (3) in der optischen Achse (3a) sieht. Wenn der Schütze diesen Punkt mit seinem Ziel in Deckung gebracht hat, kann er schießen und wird einen Treffer im Ziel haben.

Das Reflexvisier (3) hat den Vorteil, daß der Schütze mit einem Auge (11a) zielen kann und mit dem anderen Auge sein Umfeld trotzdem noch erfaßt. Der Zielvorgang erfolgt dabei bei entspannten Augen und kann sehr schnell erfolgen, weshalb das Reflexvisier (3) insbesondere zum schnellen Schuß auch auf kürzere Entfernungen geeignet ist. Das Zielen mit dem Reflexvisier ist sicherer als mit Kimme und Korn, und hat zusätzlich den Vorteil, daß sich das visierende Auge (11a) des Schützen während des Zielvorgangs nicht auf stark wechselnde Entfernungen einstellen muß und er mit dem anderen Auge das Zielumfeld erfassen kann.

Ist aber das natürliche Licht (z.B. Tageslicht oder helles Mondlicht) nicht ausreichend hell oder aber zu hell, so kann der Schütze über einen Schalter (13) eine Leuchtdiode (10b) anschalten, welche als zusätzlich elektrische Lichtquelle dient und welche ihr Licht in die lumineszierende Platte (10a) abstrahlt.

Während das Reflexvisier (3) als eine Visiereinrichtung für einen schnellen Schuß dient, dient das Zielfernrohr (2) als Visiervorrichtung für einen gezielten Schuß über eine größere Distanz. Deshalb besitzt das Zielfernrohr (2) eine vergrößernde Optik.

Das Zielfernrohr (2) ist zwischen der Waffe (4) und dem Reflexvisier (3) angeordnet. Zwischen dem Zielfernrohr (2) und dem Reflexvisier (3) befindet sich eine Öffnung (14), durch welche die Hand des Schützen greifen kann, so daß die Schußwaffe an der Visiervorrichtung (1) getragen werden kann. Stege (15a, 15b) an den Enden der Öffnung (14) sorgen dafür, daß zwischen dem Reflexvisier (3) und dem Zielfernrohr (2) eine genügend starre Verbindung besteht, so daß die beiden optischen Achsen (2a, 3a) von Zielfernrohr (2) und Reflexvisier (3) immer akkurat zueinander ausgerichtet bleiben und die Schußwaffe problemlos an der Visiervorrichtung (1) getragen werden kann.

Seitlich des Zielfernrohres (2) befinden sich zwei Batterieschächte (16a, 16b), welche die zur Betreibung der Leuchtdiode (10b) notwendige elektrische Energie liefern. Die elektrischen Kabel (in den Figuren 1 und 2 nicht eingezeichnet) werden durch eine Steg (15b) zur Leuchtdiode (10b) hochgeführt. Damit die Visiervorrichtung (1) ein möglichst geringes Gewicht besitzt, ist sie größtenteils aus einem leichten Material (z.B. verstärkten Kunststoff) ausgeführt.

Beim visieren durch das Reflexvisier (3) als auch durch das Zielfernrohr (2) befindet sich das Auge (11a, 11b) des Schützen in einem gewissen Abstand zu dem entsprechenden Visier (3, 2). Damit der durch das Zielfernrohr (2) Visierende mit seiner Kopfbedeckung nicht an das Reflexvisier stößt, ist dieses um 35 mm längst der optischen Achse in Sehrichtung nach vorne versetzt. (Dieser Abstand sollte nicht weniger als 20 mm und auch möglichst nicht mehr als 50 mm betragen, um noch eine einwandfreie Benutzung des Reflexvisiers (3) zu gewährleisten).

In Figur 3 ist nun das monokulare Zielfernrohr (2) der Visiervorrichtung (1) aus den Figuren 1 und 2 nochmals detaillierter dargestellt. Das dreifach vergrößernde Zielfernrohr (2) ist die Visiereinrichtung der Visiervorrichtung, welche zum gezielten Schuß insbesondere über größere Entfernungen dient.

Das Zielfernrohr (2) ist als Einsteck-Fernrohr ausgeführt und kann leicht in die Visiervorrichtung (1) eingesteckt und mit einem Schraubring befestigt bzw. leicht von dieser gelöst und als Einzelteil aus dieser entfernt werden. Das Zielfernrohr (2) besitzt zur schnellen Montage bzw. Demontage in die Visiervorrichtung (1 aus Figur 1 und 2) einen Anschlagring (20), welcher okularseitig angeordnet ist.

Das Zielfernrohr (2) besitzt ein Okular (21), ein Umkehrsystem (22, 22a) und ein Objektiv (23). Die Strichplatte (24) mit ihren Strichfiguren befindet sich auf der Planfläche eines Linsenelementes (22a) des Umkehrsystems (22, 22a) in der objektivseitigen Zwischenbildebene. Eine Blende (25) ist in der okularseitigen Zwischenbildebene angebracht.

Das Gehäuse des Zielfernrohres (2) ist aus einem leichten Material (Aluminium, glasfaserverstärkter Kunststoff usw.) gefertigt, damit das Zielfernrohr möglichst leicht ist. Der AP-Abstand (Abstand Okular-Auge des Visierenden) beträgt 40 mm (kann aber bei der Berechnung des Zielfernrohres frei gewält werden).

In den Figuren 4 und 5 ist nun das Reflexvisier (29) detaillierter dargestellt. Das Reflexvisier (29) liefert einen nichtvergrößernden Durchblick für den Visierenden zum Ziel.

Das geschlossene Gehäuse des Reflexvisiers (29) wird okularseitig von einer Planplatte (30) abgeschlossen, welche durch eine umlaufende Kittschicht (30a) fest mit dem Gehäuse des Reflexvisiers (29) verbunden ist.

Objektivseitig wird das Gehäuse des Reflexvisiers (29) durch eine Doppellinsenanordnung (31) verschlossen, welche durch eine weitere Kittschicht (33) fest mit dem Gehäuse des Reflexvisiers (29) verbunden ist.

Die Doppellinsenanordnung (31) besitzt eine erste äußere Linse (31a), welche eine äußere Planoberfläche (31a') und eine innere konkave Oberfläche (31a") besitzt. Die zweite, innere Linse (31b) der Doppellinsenanordnung (31) besitzt eine innere konvexe Oberfläche (31b") und eine äußere Planoberfläche (31b'). Der Radius der konkaven Oberfläche (31a") der ersten Linse (31a) und der Radius der konvexen Oberfläche (31b") der zweiten Linse (31b) sind identisch. Die beiden Linsen (31a, 31b) sind an ihren nichtplanen Oberflächen (31a", 31b") zusammen gekittet. Zwischen den beiden Linsen (31a, 31b) befindet sich eine teilreflektierende Schicht (32), welche als Kantenfilter ausgeführt ist und welche Lichtstrahlen mit einer Wellenlänge größer als 580nm reflektiert. Diese teilreflektierende Schicht (32) ist für die Wellenlänge des aus der Lichtquelle (35) austretenden Lichtes optimiert.

Die beiden Linsen (31a, 31b) der Doppellinsenordnung (31) sind so zusammengekittet, daß die Doppellinsenanordnung (31) zwei äußere Planoberflächen (31a', 31b') besitzt und somit für sie durchdringende Lichtstrahlen keine beugende Wirkung besitzt. Die Doppellinsenanordnung (31) ist um einen kleinen Winkel (36) um die optische Achse (34) nach oben gekippt. Diese Kippung sorgt dafür, daß das durch die Blende (37) aus der Beleuchtungseinrichtung mit der Lichtquelle (35) schräg in Richtung der optischen Achse (34) abgestrahlte Licht, welches von der teilreflektierenden Schicht (32) im Inneren der Doppellinsenanordnung (31) in Richtung der okularseitigen Planplatte (30) reflektiert wird, ins Auge des Visierenden (in dieser Figur nicht dargestellt) abgebildet wird. Anstelle der Kippung der Doppellinsenanordnung (31) könnten auch die gekrümmten Linsenoberflächen (31a", 31b") relativ zur Senkrechten der planen Oberflächen (31a', 31b') entsprechend gekippt sein, so daß dann die Doppellinsenanordnung (31) senkrecht zur optischen Achse (34) des Reflexvisiers (29) eingebaut sein könnte.

Im Inneren des Gehäuses des Reflexvisiers (29) sind die Randstrahlen (38a, 38b) eingezeichnet, um anzudeuten, daß das Auge des Visierenden sich bei der Benutzung des Reflexvisiers (29) in einem gewissen Abstand zum Reflexvisier (29) befindet.

Die okularseitige Planplatte (30) und die objektivseitig angeordnete Doppellinsenanordnung (31) liefern dem Visierenden ein nichtvergrößerndes Bild und diese Anordnung wird auch als 1-zu-1-Optik bezeichnet.

Das durch die Blende (37) vor der Lichtquelle (35) ausgestrahlte Licht hat eine Wellenlänge von ungefähr 620 nm, liegt also im roten Bereich.

Die teilreflektierende Schicht (32) ist so ausgeführt, daß das Licht der Lichtquelle (35) möglichst gut in Richtung des Auges des Visierenden reflektiert wird, wobei die konkave Oberfläche (31a") dafür sorgt, daß das Bild der Lichtquelle (35) scharf in das Auge des Visierenden abgebildet wird.

Die Lichtquelle (35) selber besteht im wesentlichen aus zwei Teilen. Das Licht der Lichtquelle (35) wird zum einen durch einen Körper (35a) aus lumineszierendem Material erzeugt, wobei dieser Körper (35a) von natürlichem Licht (z.B. Tageslicht) bestrahlt wird und dieses natürliche Licht in ein rotes Licht umsetzt wird, welches den Körper (35a) richtungsselektiv verläßt. Das in der Lichtquelle (35) für diesen Körper (35a) verwendete Material ist lumineszierendes Plexiglas (welsches unter diesem Namen von den deutschen Firmen Bayer oder Röhm bezogen werden kann).

Dieses lumineszierende Material in der Lichtquelle hat die Form einer rechteckförmigen Platte (35a) (siehe insbesondere Fig. 4a). Diese Platte (35a) hat eine Länge von rund 10,5 mm, eine Breite von rund 8 mm und eine Dicke von rund einem Millimeter. Die Platte (35a) ist in der Lichtquelle (35) so angeordnet, daß die Blende (37) in der Plattenmitte der Plattenvorderfläche (35a') angeordnet ist.

Auf der Plattenhinterfläche (35a") befindet sich eine Aussparung (39), welche so groß ist, daß der Kopf einer kleinen Leuchtdiode (35b) dort hineingesteckt werden kann.

Das natürliche Licht fällt auf diese Platte (35a) auf die obere Deckfläche (35a"), wird dort in rotes Licht umgewandelt und bevorzugt in Richtung der seitlichen Randflächen ausgestrahlt. Alle Oberflächen der Platte (35a) sind poliert und bis auf die obere Deckfläche (35a‴), die Austrittsöffnung auf der Plattenvorderfläche (35a') im Bereich der Blende (37) und die Aussparung (39) in der Plattenhinterfläche (35a") mit einem reflektierenden Material überzogen.

Die Verwendung des lumineszierenden Materials hat mehrere Vorteile. Zum einen verstärkt sich die Ausstrahlung aus der Platte (35a), wenn die Intensität das natürlichen Lichts zunimmt, bzw. die Ausstrahlung aus der Platte (35a) verringert sich, wenn die Intensität des natürlichen Lichts abnimmt.

Dies ist deshalb so vorteilhaft, weil dadurch der durch das Reflexvisier (29) ins Auge des Visierenden abgebildete Punkt der Lichtquelle (35) im Verhältnis zum natürlichen Licht mit einem angenähert gleichmäßigen Kontrast abgebildet wird.

Zum anderen senkt das durch die lumineszierende Platte (35a) erzeugte Licht den Lichtbedarf durch die zusätzliche elektrische Lichtquelle (35b), welche bei dem in Figur 4 dargestellten Reflexvisier (29) durch eine rote Leuchtdiode (35b) realisiert ist. Die Intensität des aus der Leuchtdiode (35b) austretenden Lichts wird dabei durch ein fotoempfindliches Element (29a) (z.B. ein Fototransistor oder eine Fotodiode) beeinflußt. Beide Maßnahmen (lumineszierendes, vom natürlichen Licht bestrahltes Material und lichtempfindliches Element) erhöhen die Lebensdauer der elektrischen Spannungsquelle (Batterie, siehe Beschreibung zu Figur 1 und 2) erheblich, so daß die eingeschaltete Visiervorrichtung bei der Verwendung im Freien eine sehr viel längere Benutzungsdauer besitzt.

Wie bereits gesagt, muß die Beleuchtungseinrichtung mit der Lichtquelle (35) bei starker Sonneneinstrahlung relativ viel Licht ausstrahlen, während in der Nacht das von der Lichtquelle (35) ausgestrahlte Licht relativ schwach sein muß, damit der durch das Reflexvisier (29) Visierende nicht durch das Licht der Lichtquelle (35) geblendet wird und sein anvisiertes Ziel bei allen Lichtverhältnissen möglichst gut erkennen kann bzw. bei starker Sonneneinstrahlung muß der ins Auge des Visierenden abgebildete Leuchtpunkt der Lichtquelle (35) ausreichend stark strahlen, damit der gewünschte Kontrast erhalten wird und der Visierende den Leuchtpunkt ausreichend stark erkennt.

Um dies zu erreichen, ist die elektrische Lichtquelle (35) (welche auch eine Glühlampe sein könnte) so beschaltet, daß sie ihre maximale Leistung bei starker Sonnenlichteinstrahlung besitzt. Wie dies erreicht werden kann, ist in Figur 6 beispielhaft dargestellt. Der in Figur 6 dargestellte Schaltplan für die Leuchtdiode (40) besitzt eine Batterie (41) als Spannungsquelle.

Im Schaltplan ist zusätzlich ein lichtempfindliches Element (43) enthalten, welches bei dem beschriebenen Reflexvisier (29) als Fototransistor ausgeführt ist. Dieser Fototransistor (43) ist an der Visiervorrichtung so angebracht, daß er ungestört vom Tageslicht bestrahlt werden kann.

Der Eingang des Fototransistors (43) ist mit der Leuchtdiode (40) und mit einem Pol der Batterie (41) verbunden. Der Ausgang des Fototransistors (43) ist mit der Basis eines NPN-Transistors verbunden, dessen Durchlässigkeit somit vom Fototransistor (43) gesteuert wird. Kollektorseitig ist der NPN-Transistor (42) mit der Leuchtdiode (40) verbunden und emitterseitig mit dem zweiten Pol der Batterie (41).

Damit das Tageslicht auf das lumineszierende Material der Platte (35a) fallen kann, befindet sich im Gehäuse (46) der Visiervorrichtung (29) eine, der Größe der Platte (35a) angepaßte Öffnung (44), welche nach außen durch eine transparente Platte (45) abgeschlossen ist, damit es nicht zu Verschmutzung im Inneren der Visiervorrichtung kommt.

Das in der Fig. 7 dargestellte Reflexvisier (50) mit okularseitigem Gehäuseabschluß (57) (planparallele Platte) unterscheidet sich von dem Reflexvisier (29) in der Fig. 4 dadurch, daß das aus der Beleuchtungseinrichtung (51) austretende Licht nicht direkt in Richtung des objektivseitigen Gehäuseabschluß (52) mit seinen beiden Linsen (52a, 52b) und der zwischen diesen angeordneten teilreflektierender Schicht (53) ausgestrahlt wird. Vielmehr wird bei dem Reflexvisier (50) das von der Beleuchtungseinrichtung (51) kommende Licht auf einen, das Licht reflektierenden Körper (54) (z.B. ein Spiegel) abgestrahlt, welcher dann das von der Beleuchtungseinrichtung (51) kommende Licht in Richtung der teilreflektierenden Schicht (53) ablenkt. Diese teilreflektierende Schicht (53) sorgt dann wieder für, daß das Licht der Beleuchtungseinrichtung (51), welche lumineszierendes Material als Lichtquelle und/oder eine elektrische Lichtquelle beinhaltet, in das Auge des, das Relexvisier (50) Benutzenden in der optischen Achse (55) des Reflexvisiers (50) abgebildet wird.

Vor der Beleuchtungseinrichtung (51) ist eine Blende (56) angeordnet, welche dafür sorgt, daß das ganze Licht aus der Beleuchtungseinrichtung (51) durch den reflektierenden Körper (54) in Richtung der Doppellinsenanordnung (52) reflektiert wird.

Die Blende (56) ist dabei als Absehen ausgebildet. Dies bedeutet, daß durch die Blende (56) die Zielmarke ausgebildet wird. Je nach Form der Blende kann dabei diese Zielmarke ein Kreis, eine Pfeilspitze eine horizontale Strich-Punkt-Strich-Figur oder aber jede beliebige andere Zielmarke, welche auch auf einer Strichplatte in einem Zielfernrohr aufgebracht sein könnte, sein, wobei die mögliche Form der Zielmarke mit der Form des Körpers aus lumineszierenden Material in der Beleuchtungseinrichtung (51) abgestimmt sein muß.

Auf eine separate körperliche Ausgestaltung der Blende (56) kann verzichtet werden, wenn die Blende (56) als Aussparung der reflektierenden Schicht auf der Platte aus lumineszierenden Materials in der Beleuchtungseinrichtung (51) ausgebildet ist, wie dies bereits erwähnt wurde. Dabei braucht die Ausstrahlungsfläche (Blendenöffnung) nicht plan sein, sondern kann entsprechend den vorgegebenen optischen Verhältnissen im Reflexvisier (50) geformt sein. Auch die anderen Seiten der rechteckförmigen Platte aus lumineszierenden Material in der Beleuchtungseinrichtung (51) brauchen nicht plan sein, sondern können zur Optimierung der Lichtausbeute und zur Anpassung an die konstruktieven Gegebenheiten im Inneren der Visiereinrichtung eine andere Oberflächenform besitzen (z.B. runder Stab, gebogener Stab, usw.). Wichtig ist allein, daß dem natürlichen Licht eine ausreichend große Einstrahlfläche dargeboten wird.

Die Beleuchtungseinrichtung kann mit lumineszierendem Material auch in einer vergrößernden optischen Einrichtung (Fernglas, Zielfernrohr) eingebaut sein. Dazu muß lediglich im Strahlengang der vergrößernden optischen Einrichtung dafür gesorgt werden, daß das von der Beleuchtungsanornung ausgestrahlte Licht ins Auge des Einrichtungsbenutzers entsprechend dem vorhergesagten abgebildet wird. Die teilreflektierende Schicht kann sich dabei auf einem optischen Element der vergrößernden Einrichtung befinden oder aber in einer separate Einrichtung entsprechend der Doppellinsenanordnung angebracht sein.

## Patentansprüche

1. Visiereinrichtung mit einer optischen Achse und mit einer farbiges Licht ausstrahlenden Beleuchtungseinrichtung zur Erzeugung einer in das Auge eines Visierenden abgebildeten farbigen Zielmarke, wobei in der Beleuchtungseinrichtung eine zuschaltbare Lichtquelle vorgesehen ist, und in der lumineszierendes Material, welches von natürlichem Licht wie Tageslicht oder helles Mondlicht bzw. einer anderen Lichtquelle bestrahlt wird, als Lichtquelle (10a, 35a) enthalten ist, dadurch gekennzeichnet, daß der Beleuchtungseinrichtung (10, 35, 51) ein lichtempfindliches Element (3b) das vom natürlichen Licht ungestört bestrahlbar angeordnet ist, zugeordnet ist, wobei bei aufgenommener hoher Intensität des natürlichen Lichtes die zuschaltbare Lichtquelle (10b, 35b), mit maximaler Leistung betrieben wird.

2. Visiereinrichtung nach Anspruch 1, dadurch gekennzeichnet, daß bei geringer Intensität der natürlichen Strahlung die zusätzliche Lichtquelle mit geringer Leistung betrieben wird.

3. Visiereinrichtung nach Anspruch 1, dadurch gekennzeichnet, daß der zusätzlichen Lichtquelle (10b, 35b) ein Schalter (13) zugeordnet ist, mittels dessen Betätigung die zusätzliche Lichtquelle (10b, 35b) zur Verbesserung des Kontrastes der Zielmarke zuschaltbar ist.

4. Visiereinrichtung nach Anspruch 1, wobei die zusätzliche Lichtquelle eine elektrische Lichtquelle ist, dadurch gekennzeichnet, daß das lichtempfindliche Element (3b, 29a, 43), welches die Intensität des natürlichen Lichts mißt und die Leuchtstärke der zusätzlichen Lichtquelle (10b, 35b) einer Veränderung der Intensität des natürlichen Lichtes anpaßt, in die Stromversorgung der elektrischen Lichtquelle (10b, 35b, 40) eingebaut ist.

5. Visiereinrichtung nach Anspruch 1, dadurch gekennzeichnet, daß das lumineszierende Material (10a, 35a) als rechteckförmige Platte (10a, 35a) ausgebildet ist, wobei die Dicke des lumineszierenden Materials (10a, 35a) kleiner ist als die Länge oder die Breite und die Bestrahlungsfläche für das natürliche Licht über die Länge und die Breite gegeben ist.

6. Visiereinrichtung nach einem der Ansprüche 1-5, dadurch gekennzeichnet, daß vor der Beleuchtungseinrichtung (10, 35, 51) eine Blende (9, 37, 56) angeordnet ist.

7. Visiereinrichtung nach einem der Ansprüche 1-6, dadurch gekennzeichnet, daß die Visiereinrichtung (3, 29, 50) ein geschlossenes Gehäuse besitzt und daß in dem Gehäuse ein Lichtkanal (12b) vorhanden ist, durch welche das lumineszierende Material (10a, 35a) von natürlichen Licht bestrahlt werden kann.

8. Visiereinrichtung nach Anspruch 7, dadurch gekennzeichnet, daß okularseitig im Gehäuse ein durchsichtiger Gehäuseabschluß (6, 30, 57) ohne beugende Wirkung für durchlaufende Lichtstrahlen angeordnet ist, daß objektivseitig ein durchsichtigen Gehäuseabschluß (7, 31, 52) mit planparallelen Oberflächen (31a', 31b') in Durchblickrichtung ohne beugende Wirkung für durchlaufende Lichtstrahlen angeordnet ist, und daß der objektivseitige Gehäuseabschluß (7, 31, 52) das von der Beleuchtungseinrichtung (10, 35, 51) erzeugte Bild in der optischen Achse 3a, 34, 55) der Visiereinrichtung (3, 29, 50) durch den okularseitigen Gehäuseabschluß (6, 30, 57) in das Auge des Visierenden reflektiert und fokussiert.

## Claims

1. Sighting apparatus with an optical axis and with an illumination system emitting colored light for the generation of a colored sighting mark which is imaged in the user's eye, such illumination system being provided with a backup light source and containing luminescent material which is irradiated by natural light such as daylight, bright moonlight or another light source, thus acting as a light source (10a, 35 a), characterized by the fact that the illumination system (10, 35, 51) is combined with a photosensitive element (3b) which is arranged in such a way that it is irradiated by natural light without obstruction, with high intensity of the incident natural light causing the backup light source to be operated at maximum power.

2. Sighting apparatus of claim 1, characterized by the fact that low intensity of the incident natural light causes the backup light source to be operated at low power.

3. Sighting apparatus of claim 1, characterized by the fact that a switch (13) is provided for the backup light source (10b, 35b), permitting the backup light source (10b, 35b) to be activated in order to enhance the contrast of the sighting mark.

4. Sighting apparatus of claim 1, wherein the backup light source is an electrical light source, characterized by the fact that the photosensitive element (3b, 29a, 43) which measures the intensity of the natural light and adapts the illumination intensity of the backup light source (10b, 35b) in accordance with the variation in intensity of the natural light is integrated in the power supply of the electrical light source (10b, 35b, 40).

5. Sighting apparatus of claim 1, characterized by the fact that the luminescent material (10a, 35a) is designed as a rectangular plate (10a, 35a), with the thickness of the luminescent material (10a, 35a) being less than its length or width, and with the surface illuminated by natural light being defined by the length and width of the plate.

6. Sighting apparatus of one of the claims 1 to 5, characterized by the fact that a pinhole (9, 37, 56) is provided in front of the illumination system (10, 35, 51).

7. Sighting apparatus of one of the claims 1 to 6, characterized by the fact that the sighting apparatus (3, 29, 51) has a closed housing, such housing containing a light channel (12b) through which the luminescent material (10a, 35a) can be irradiated by natural light.

8. Sighting apparatus of claim 7, characterized by the fact that the eyepiece end of the housing is fitted with a transparent housing cover (6, 30, 57) which has no diffracting effect on the light rays passing through it, by the fact that the objective end of the housing is fitted with a transparent housing cover (7, 31, 52) with plane-parallel surfaces (31a', 31b') which has no diffracting effect in the viewing direction on the light beams passing through it, and by the fact that the housing cover at the objective end (7, 31, 52) reflects the image produced by the illumination system (10, 35, 51) along the optical axis (3a, 34, 55) of the sighting apparatus (3, 29, 50) through the housing cover at the eyepiece end (6, 30, 57) into the user's eye in such a way that the image is focused there.

## Revendications

1. Dispositif de visée doté d'un axe optique et d'un dispositif d'éclairage émettant de la lumière colorée et servant à former un repère coloré qui est reproduit dans l'oeil d'un observateur, ledit dispositif d'éclairage disposant d'une source de lumière d'appoint et contenant du matériau luminescent qui, irradié par de la lumière naturelle comme la lumière du jour ou le clair de lune ou par une autre source de lumière, fait office de source de lumière (10a, 35a), caractérisé en ce qu'un élément photosensible (3b) disposé de façon à pouvoir être éclairé sans entraves par la lumière du jour est associé au dispositif d'éclairage (10, 35, 51), la source de lumière d'appoint (10b, 35b) étant exploitée à puissance maximale lorsque l'intensité de la lumière naturelle captée est élévée.

2. Dispositif de visée selon la revendication 1, caractérisé en ce que la source de lumière d'appoint est exploitée à faible puissance lorsque l'intensité de la lumière naturelle est réduite.

3. Dispositif de visée selon la revendication 1, caractérisé en ce qu'un interrupteur (13) est assigné à la source de lumière d'appoint (10b, 35b), au moyen duquel la source de lumière d'appoint (10b, 35b) peut être mise en circuit pour améliorer le contraste du repère de visée

4. Dispositif de visée selon la revendication 1, où la source de lumière d'appoint est une source de lumière électrique, caractérisé en ce que l'élément photosensible (3b, 29a, 43) qui mesure l'intensité de la lumière naturelle et qui ajuste la luminosité de la source de lumière d'appoint (10b, 35b) en fonction des variations d'intensité de la lumière naturelle, est incorporé à l'alimentation électrique de la source de lumière électrique (10b, 35b, 40).

5. Dispositif de visée selon la revendication 1, caractérisé en ce que le matériau luminescent (10a, 35a) est exécuté sous forme d'une lame rectangulaire (10a, 35a), l'épaisseur du matériau luminescent étant inférieure à sa longueur ou à sa largeur et la surface d'irradiation par la lumière naturelle étant déterminée par la longueur et par la largeur de cette lame rectangulaire.

6. Dispositif de visée selon l'une des revendications 1 à 5, caractérisé en ce qu'un diaphragme (9, 37, 56) est disposé devant le dispositif d'éclairage (10, 35, 51).

7. Dispositif de visée selon l'une des revendications 1 à 6, caractérisé en ce que le dispositif de visée (3, 29, 50) est exécuté avec un boîtier fermé et que ce boîtier est pourvu d'un canal lumineux (12b) qui laisse passer la lumière naturelle assurant l'irradiation du matériau luminescent (10a, 35a).

8. Dispositif de visée selon la revendication 7, caractérisé en ce que le boîtier est muni côté oculaire d'un élément de recouvrement transparent (6, 30, 57) qui ne diffracte pas les rayons qui le traversent, qu'un élément de recouvrement transparent (7, 31, 52) à faces planes et parallèles (31a', 31b') qui ne diffracte pas les rayons lumineux le traversant dans la direction d'observation est disposé côté objectif et que l'élément de recouvrement côté objectif (7, 31, 52) réfléchit l'image formée par le dispositif d'éclairage (10, 35, 51) le long de l'axe optique (3a, 34, 55) du dispositif de visée (3, 29, 50) vers l'oeil de l'observateur, à travers l'élément de recouvrement côté oculaire (6, 30, 57), et l'y focalise.
